# EUROPEAN PATENT SPECIFICATION

(11) **EP 3 526 536 B1**
(45) Date of publication and mention of the grant of the patent: **07.12.2022**
(21) Application number: 17792221.8
(22) Date of filing: 10.10.2017
(51) Int. Cl.: F28F 1/42, F28F 13/12, F28D 21/00

(54) **FLAME PIPE OF A FIRED HEAT EXCHANGER**
FLAMMROHR EINES BRENNKAMMERWÄRMETAUSCHERS
TUBE DE FLAMME D'UN ÉCHANGEUR THERMIQUE À COMBUSTION

(30) Priority: 13.10.2016 PL 41909716
(43) Date of publication of application: 21.08.2019
(73) Proprietor: AIC Spólka Akcyjna, 81-577 Gdynia (PL)
(72) Inventor: KUZMA, Mariusz, 81-757 Sopot (PL)
(74) Representative: Pomianek, Grazyna
(86) International application number: PCT/PL2017/000100
(87) International publication number: WO 2018/070889

(56) References cited:
- EP-A1- 1 548 386
- US-A- 2 016 720
- US-A- 5 271 376
- US-A1- 2005 230 094
- US-A1- 2008 029 243
- US-A1- 2010 012 306
- US-A1- 2013 075 070
- US-A1- 2015 211 751

## Description

The invention concerns a flame pipe of a fired heat exchanger designated for central heating and utility water installations.

Known are heat exchanger pipes fitted with devices to turbulise the combustion gases flowing inside the pipes, which intensify the heat exchange process.

Known from published European patent application EP2384837 is a heat exchanger pipe of other-than-circular shape in cross-section, rectangular in particular, made of a pipe circular in cross-section and having undulated surface with the undulation spreading both sideways and lengthways and the amplitude of the undulation ranging from 0.2 to 1.2 of the outer diameter of the pipe circular in cross-section.

Known from the published European patent application EP1429085 is a pipe the shape of which in cross section changes along its length and with a flat section in the centre.

Known from US 2 016 720 A is a boiler tube for conducting combustion gases having in its length directly opposed inwardly extending projections extending diagonally with respect to the axis of the tube and cross-wise with reference to each other whereby a relatively narrow passage is left between the projections, said narrow passage acting to increase the velocity of the fluid at this point.

Known from EP 1 584 386 A1 is an EGR cooler having a multiplicity of round in section tubes which are juxtaposed spaced apart from each other, with both ends of the tubes leading to a pair of headers, with exhaust gases to be cooled circulating within the tubes, and with a cooling fluid circulating around outer surfaces of the tubes, wherein the round in section tubes are plastically deformed in one plane crossing centerlines of the tubes such that corrugated exhaust gas flow paths are formed inside the tubes.

Known from US 5 271 376 A is a fuel-fired condensing furnace which comprises the tubular heat exchange members. Each tube heat transfer section is flattened on opposite sides thereof in a manner substantially narrowing it, relative to its associated combustion section, in a direction transverse to the supply air flow direction. Indentation means are formed in the opposite flattened sides of the narrowed tube sections. The indentations on each tube section side are spaced apart from one another in a direction parallel to the tube section axis and are each elongated in a direction parallel to such axis, with the indentations on one side of each flattened tube section being axially staggered relative to the indentation series on the other side of the tube section.

The purpose of the invention is to develop a flame pipe for a fired heat exchanger which would intensify the heat exchange process while reducing the flow resistance of the combustion gas.

The purpose has been achieved by developing a new geometry of the flame pipe.

A flame pipe of a fired heat exchanger basically circular in cross section, having at least two inward dents in its walls, each dent has two surfaces which are not longitudinal to the pipe axis but converging to each other towards the inside of the pipe, and said two dents are positioned in opposite walls of the pipe forming a pair, characterised in that the dents of the same pair differ in depth.

Dent surfaces are convergent to each other towards the inside of the pipe, and positioned transversely or slantways with respect to the pipe axis. Preferably, the two dents are positioned opposite each other, and the distance between the dent areas reaching farthest towards the inside of the pipe does not exceed 60% of the inner diameter of the pipe measured in the section devoid of the dents, or the two dents are axially shifted with respect to each other by a distance not exceeding the sum of the depths of the two dents in the pair.

Preferably, the dent pairs are pressed along the pipe length parallel, one pair after another, or the dent pairs are pressed along the pipe length, one pair after another, and rotated with respect to the adjacent dent pairs by 180°, or the dent pairs are pressed along the pipe length and rotated by the angle ranging from 0° to 90° with respect to the adjacent dent pairs.

The dent pairs are arranged along the pipe length either regularly or irregularly.

The designed geometry of the pipe according to the invention ensures increased turbulence of the flow of the combustion gases, while keeping the flow resistance of the combustion gases flowing in the pipe low.

These and other characteristics of the invention will be clear from the following description of a preferential form of embodiment, given as a non-restrictive example, with reference to the attached drawings wherein:

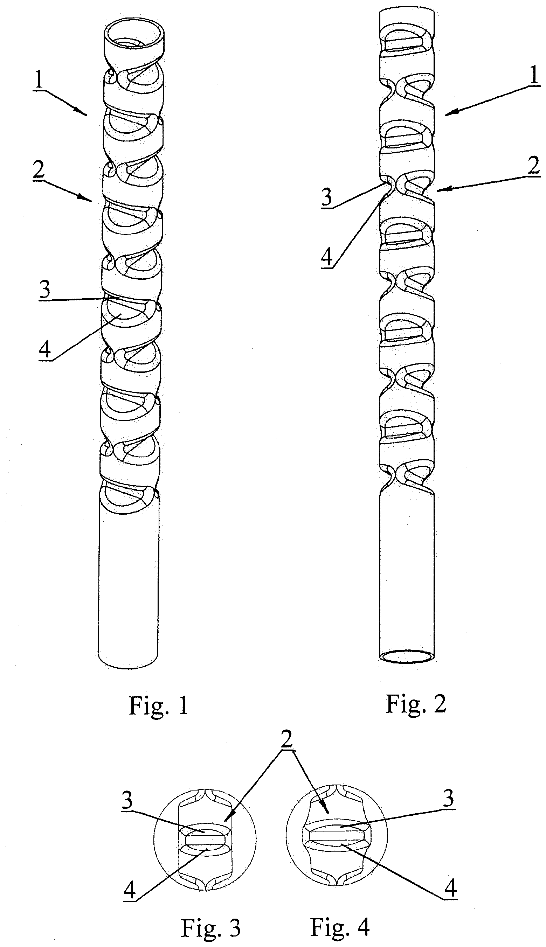

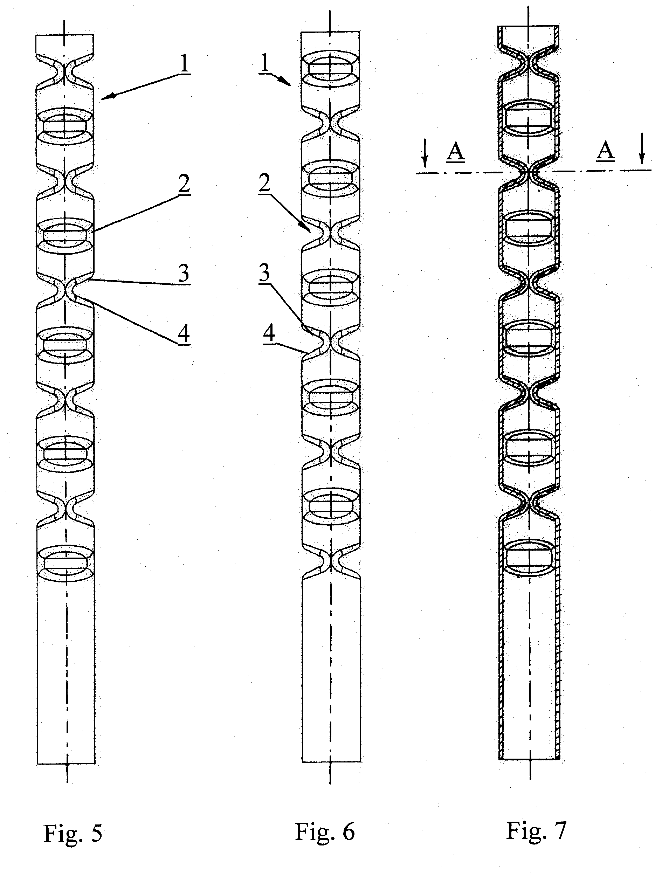

Fig.1 and Fig. 2 show the pipe with dent pairs positioned transversely with respect to the pipe axis and rotated with respect to each other by 90°, shown in the isometric projection; Fig.3 and Fig. 4 depict the same fragment of the pipe as presented in Fig. 1 and Fig. 2, showing the transverse dent in two variants, in the orthographic projection; Fig.5 and Fig. 6 show the pipe as in

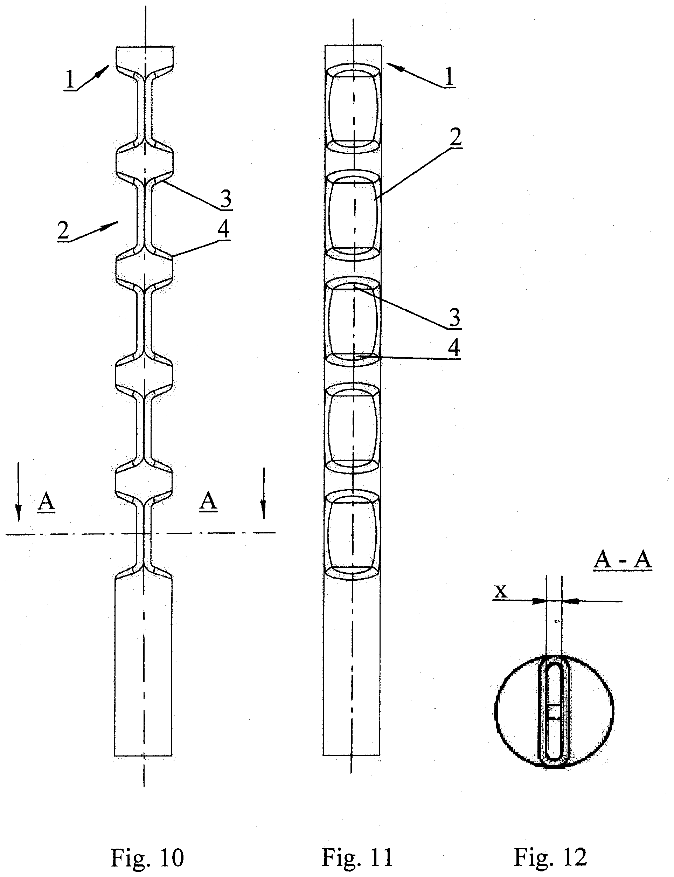

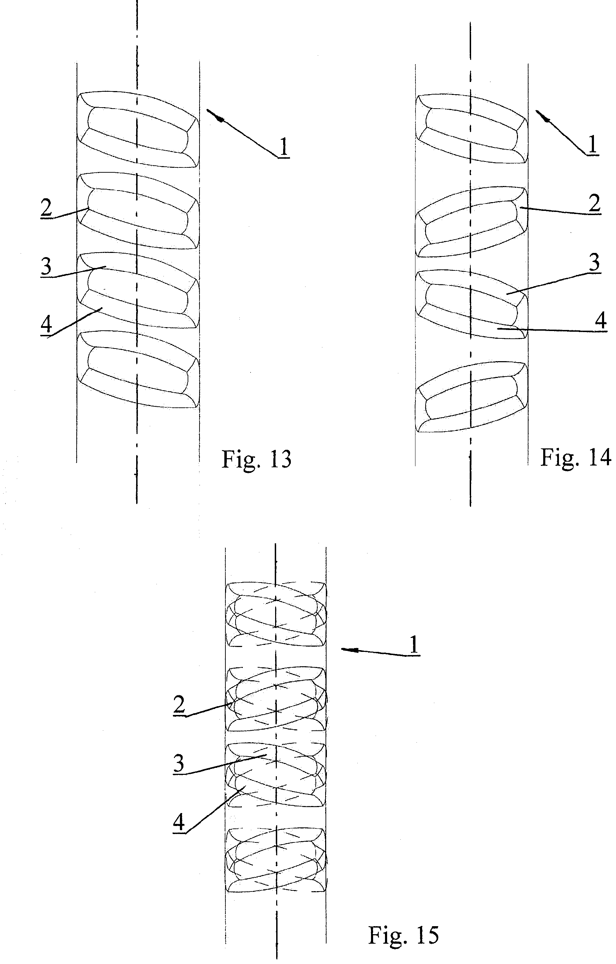

Fig. 1 and Fig. 2 in side view; Fig.7 illustrate axial section of the pipe as shown in Fig. 1 and Fig. 2; Fig. 8 to Fig. 11 depict the pipe with dent pairs in two variants, positioned transversely with respect to the pipe axis and pressed parallely along the pipe length, one pair after another, shown in side view; Fig. 12 illustrates the pipe as in Fig. 7, Fig. 8 and Fig. 10 shown in cross section along the A-A plane crossing the apex of the dent; Fig. 13 depicts a fragment of the pipe with dent pairs positioned slantways with respect to the pipe axis, pressed parallely along the pipe length, one pair after another, shown in side view; Fig. 14 illustrates a fragment of the pipe with dent pairs positioned slantways with respect to the pipe axis, pressed along the pipe length, one pair after another, each pair rotated by 180° with respect to the other, shown in side view; Fig. 15 depicts a fragment of the pipe with dent pairs positioned slantways with respect to the pipe axis, pressed along the pipe length, one pair after another, each dent in a pair rotated with respect to the other by 180°.

The flame pipe 1 of a fired heat exchanger in the first exemplary embodiment is circular in cross section, with inward dents 2 pressed in its walls. Each dent 2 has two surfaces 3, 4, positioned transversely with respect to the axis of the pipe 1 and convergent to each other towards the inside of the pipe 1, positioned opposite each other forming a pair in which the dents 2 differ in depth, and the distance X between the dent areas reaching farthest towards the inside of the pipe does not exceed 60% of the inner diameter of the pipe measured in the section devoid of the dents. The pipe in the area where the dent is pressed can either keep its original diameter measured along the dent, as shown in Fig. 3, or can gain in diameter with respect to the original dimension measured along the dent, as shown in Fig. 4.

In one of the variants the pairs of the dents 2 are arranged regularly along the length of the pipe 1 and rotated by 90° with respect to the adjacent dent pairs, as shown in Fig. 1, Fig. 2, Fig. 5, Fig. 6, and Fig. 7.

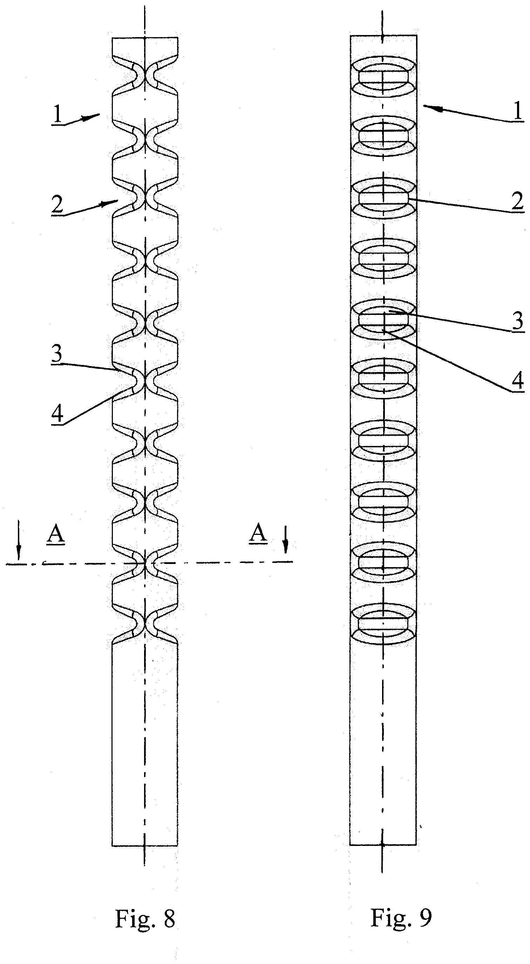

In another variant, the pairs of the dents 2 are arranged regularly along the length of the pipe 1, one pair after another, as shown in Fig. 8 and Fig 9, as well as Fig. 10 and Fig. 11 (dents of different shapes).

In the second exemplary embodiment of the invention the flame pipe 1 of a fired heat exchanger is circular in cross-section, with inward dents 2 pressed in its walls. Each dent 2 has two surfaces 3, 4 positioned slantways (at any angle α ≠ 90°) with respect to the axis of the pipe 1, convergent to each other towards the inside of the pipe 1, and positioned opposite each other forming a pair in which the dents 2 differ in depth, and the distance (not shown on the drawing) between the dent areas reaching farthest towards the inside of the pipe does not exceed 60% of the inner diameter of the pipe 1 measured in the section devoid of the dents.

In one of the variants, the surfaces 3, 4, of the two dents 2 forming a pair are positioned at the same angle with respect to the axis of the pipe 1, and the pairs of the dents 2 are arranged regularly and parallely along the length of the pipe 1, one pair after another, as shown in Fig. 13.

In another variant surfaces 3, 4 of the two dents 2 forming a pair are positioned at the same angle with respect to the axis of the pipe 1, whereas the pairs of the dents 2 are rotated with respect to the adjacent dent pairs by 180° and arranged regularly along the length of the pipe 1, as shown in Fig. 14.

In yet another variant, the dents 2 forming a pair are rotated with respect to each other by 180°, and the pairs of the dents 2 are arranged regularly along the length of the pipe 1, as shown in Fig. 15.

In yet other embodiments of the invention (not shown on the drawing), the two dents 2 are positioned in the opposite walls of the pipe 1 forming a pair, in which they are axially shifted with respect to each other by a distance not exceeding the sum of the depths of the two dents in the pair.

In other variants (not shown on the drawing) of the embodiments of the invention described above, the pairs of the dents 2 are arranged irregularly along the length of the pipe 1.

In all variants of the described embodiments, the dents 2 of the same pair differ in depth.

## Claims

1. Flame pipe of a fired heat exchanger basically circular in cross section, having at least two inward dents in its walls, each dent (2) having two surfaces (3, 4) which are not longitudinal to the axis of the pipe (1) but converging to each other towards the inside of the pipe (1), and said two dents (2) being positioned in opposite walls of the pipe (1) forming a pair, **characterised in that** the dents (2) of the same pair differ in depth.

2. The pipe according to Claim 1, **characterised in that** the surfaces (3, 4) of the dent (2) are convergent to each other towards the axis of the pipe (1).

3. The pipe according to Claim 1, **characterised in that** the surfaces (3, 4) of the dent (2) convergent to each other towards the inside of the pipe (1) are positioned slantways with respect to the pipe axis.

4. The pipe according to Claim 1, **characterised in that** the two dents (2) are positioned opposite each other and the distance (X) between the dent areas reaching farthest towards the inside of the pipe does not exceed 60% of the inner diameter of the pipe (1) measured in the a section devoid of the dents.

5. The pipe according to Claim 1, **characterised in that** the two dents (2) are axially shifted with respect to each other by a distance not exceeding the sum of the depths of the two dents in the pair.

6. The pipe according to Claim 1, **characterised in that** the pairs of the dents (2) are pressed along the length of the pipe (1) parallely, one pair after another.

7. The pipe according to Claim 1, characterised inthat the pairs of the dents (2) are pressed along the length of the pipe (1), one pair after another, and rotated with respect to the adjacent dent pairs by 180°.

8. The pipe according to Claim 1, **characterised in that** that the pairs of the dents (2) are pressed along the length of the pipe (1) and rotated by the angle ranging from 0° to 90° with respect to the adjacent dent pairs.

9. The pipe according to Claim 1, **characterised in that** the pairs of the dents (2) are arranged regularly along the length of the pipe (1).

10. The pipe according to Claim 1, **characterised in that** the pairs of the dents (2) are arranged irregularly along the length of the pipe (1).

## Patentansprüche

1. Flammrohr eines Brennkammerwärmetauschers mit einem im wesentlichen kreisförmigen Querschnitt, das an seiner Seitenfläche mindestens zwei, nach innen gerichtete Vertiefungen aufweist, wobei jede Vertiefung (2) aus zwei Flächen (3, 4) besteht, die nicht in die Längsrichtung der Achse des Rohrs (1) und in die Richtung des Rohrinneren (1) zueinander konvergent verlaufen, wobei die beiden genannten Vertiefungen (2) auf den gegenüberliegenden Seiten des Rohrs (1) so angeordnet sind, dass sie ein Paar bilden, **dadurch gekennzeichnet, dass** die gepaarten Vertiefungen (2) unterschiedliche Tiefen aufweisen.

2. Rohr nach Anspruch 1, **dadurch gekennzeichnet, dass** die in die Richtung des Rohrinneren (1) zueinander konvergent verlaufenden Flächen (3, 4) der Vertiefung (2) quer zur Achse des Rohres (1) angeordnet sind.

3. Rohr nach Anspruch 1, **dadurch gekennzeichnet, dass** die Flächen (3, 4) der Vertiefung (2), die in die Richtung des Rohrinneren (1) konvergent zueinander verlaufen, zur Rohrachse schräg angeordnet sind.

4. Rohr nach Anspruch 1, **dadurch gekennzeichnet, dass** die beiden Vertiefungen (2) zueinander gegenüberliegend angeordnet sind und ein Paar bilden, bei dem der Abstand (X) zwischen den am tiefsten im Inneren des Rohrs liegenden Bereichen dieser Vertiefungen nicht größer ist als 60 % des Innendurchmessers des Rohrs (1), gemessen in einem Bereich ohne Vertiefungen.

5. Rohr nach Anspruch 1, **dadurch gekennzeichnet, dass** die beiden Vertiefungen (2) axial zueinander um einen Abstand versetzt sind, der nicht größer ist als die Summe der Tiefen der beiden Vertiefungen in einem Paar.

6. Rohr nach Anspruch 1, **dadurch gekennzeichnet, dass** die Paare der Vertiefungen (2) entlang der Rohrlänge (1) parallel untereinander angeordnet sind.

7. Rohr nach Anspruch 1, **dadurch gekennzeichnet, dass** die Paare der Vertiefungen (2) entlang der Rohrlänge (1) untereinander angeordnet und gegenüber den benachbarten Paaren der Vertiefungen um 180° gedreht sind.

8. Rohr nach Anspruch 1, **dadurch gekennzeichnet, dass** die Paare der Vertiefungen (2) entlang der Rohrlänge (1) angeordnet sind und gegenüber den benachbarten Paaren der Vertiefungen um einen Winkel zwischen 0° und 90° gedreht sind.

9. Rohr nach Anspruch 1, **dadurch gekennzeichnet, dass** die Paare der Vertiefungen (2) gleichmäßig über die Rohrlänge (1) angeordnet sind.

10. Rohr nach Anspruch 1, **dadurch gekennzeichnet, dass** die Paare der Vertiefungen (2) ungleichmäßig über die Rohrlänge (1) angeordnet sind.

## Revendications

1. Tube de flamme d'un échangeur thermique à combustion à section sensiblement circulaire, ayant sur sa surface latérale au moins deux bosses tournés vers l'intérieur, lequel chaque bosse (2) a deux surfaces (3, 4) non longitudinales à l'axe du tube (1) et convergeant l'une vers l'autre à l'intérieur du tube (1), et les deux dits bosses (2) placés sur des côtés opposés du tube (1) pour former une paire, **caractérisé en ce que** les bosses (2) de la même paire ont des profondeurs différentes.

2. Tube selon la revendication 1, **caractérisé en ce que** les surfaces (3, 4) des bosses (2), convergeant l'une vers l'autre vers l'intérieur du tube (1), s'étendent transversalement à l'axe du tube (1).

3. Tube selon la revendication 1, **caractérisé en ce que** les surfaces (3, 4) des bosses (2), coïncidant entre elles dans la direction de l'intérieur du tube (1), sont disposés en diagonale par rapport à l'axe du tube.

4. Tube selon la revendication 1, **caractérisé en ce que** deux bosses (2) sont situés à l'opposé l'une de l'autre, formant une paire dans laquelle la distance (X) entre les zones les plus internes de ces bosses n'est pas supérieure à 60% du diamètre interne du tube (1) mesuré dans la zone sans bosses.

5. Tube selon la revendication 1, **caractérisé en ce que** les deux bosses (2) sont déplacés axialement l'une par rapport à l'autre d'une distance qui n'est pas supérieure à la somme des profondeurs des deux bosses de la paire.

6. Tube selon la revendication 1, **caractérisé en ce que** les paires des bosses (2) sont réalisées sur la longueur du tube (1) en parallèle l'une en dessous de l'autre.

7. Tube selon la revendication 1, **caractérisé en ce que** les paires des bosses (2) sont réalisées sur la longueur du tube (1), l'une au-dessous de l'autre, et tournés de 180° par rapport aux paires des bosses adjacentes.

8. Tube selon la revendication 1, **caractérisé en ce que** les paires des bosses (2) sont réalisées sur la longueur du tube (1) et tournés par rapport aux paires des bosses adjacentes d'un angle de 0° à 90°.

9. Tube selon la revendication 1, **caractérisé en ce que** les paires des bosses (2) sont situées de manière régulière sur la longueur du tube (1).

10. Tube selon la revendication 1, **caractérisé en ce que** les paires des bosses (2) sont situées de manière irrégulière sur la longueur du tube (1).
